(19) **Europäisches Patentamt / European Patent Office / Office européen des brevets**

(11) **EP 2 576 056 B1**

(12) **FASCICULE DE BREVET EUROPEEN**

(45) Date de publication et mention
de la délivrance du brevet:
**28.03.2018 Bulletin 2018/13**

(21) Numéro de dépôt: **11721064.1**

(22) Date de dépôt: **24.05.2011**

(51) Int Cl.:
**B01L 3/00** (2006.01)     **B81C 1/00** (2006.01)

(86) Numéro de dépôt international:
**PCT/EP2011/058496**

(87) Numéro de publication internationale:
**WO 2011/147842 (01.12.2011 Gazette 2011/48)**

(54) **PROCEDE DE FABRICATION D'UNE PUCE MICROFLUIDIQUE, PUCE ET PLAQUE ASSOCIEES**

VERFAHREN ZUR HERSTELLUNG EINES MICROFLUIDEN CHIPS, CHIP UND ASSOZIIERTE PLATTE

PROCESS A FABRICATING A MICROFLUIDIC CHIP, CHIP AND ASSOCIATED PLATE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.05.2010 FR 1054183**

(43) Date de publication de la demande:
**10.04.2013 Bulletin 2013/15**

(73) Titulaires:
• **Centre National de la Recherche Scientifique (C.N.R.S.)**
**75794 Paris Cedex 16 (FR)**
• **Université Paris-Sud 11**
**91400 Orsay (FR)**

(72) Inventeurs:
• **GOSNET-HAGHIRI, Anne-Marie**
**F-92330 Sceaux (FR)**
• **NANTEUIL, Clément**
**92130 Issy les Moulineaux (FR)**

(74) Mandataire: **Regimbeau**
**20, rue de Chazelles**
**75847 Paris Cedex 17 (FR)**

(56) Documents cités:
**EP-A1- 2 096 445      WO-A1-2004/048254**
**US-A1- 2010 111 770**

• **THOMAS STEEN HANSEN ET AL: "Fast prototyping of injection molded polymer microfluidic chips", JOURNAL OF MICROMECHANICS & MICROENGINEERING, INSTITUTE OF PHYSICS PUBLISHING, BRISTOL, GB, vol. 20, no. 1, 1 janvier 2010 (2010-01-01), page 15020, XP020168881, ISSN: 0960-1317**

**Description**

DOMAINE TECHNIQUE GENERAL

La présente invention concerne une puce microfluidique comportant une plaque et un capot comportant au moins un canal microfluidique.

L'invention concerne également un procédé de fabrication et une plaque associés.

ETAT DE L'ART

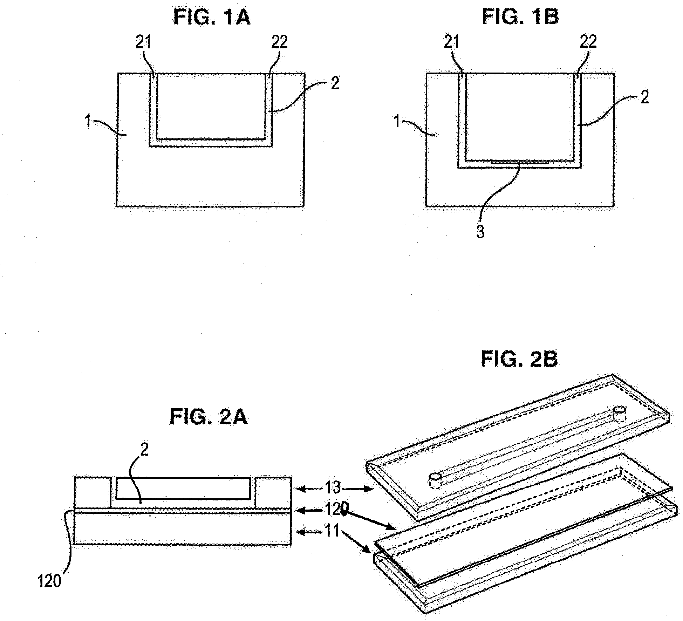

Comme le montrent les figures 1, une puce connue microfluidique (également appelée « laboratoire sur puce » ou 'lab-on-a-chip' selon la terminologie anglo-saxonne parfois utilisée par l'homme du métier) est un dispositif miniaturisé d'analyse biologique ou chimique, qui est constitué d'au moins une plaque 1 de faible épaisseur (de l'ordre de quelques dizaines à quelques centaines de micromètres), constituée par exemple

- de verre (c'est-à-dire une substance dure, cassante et transparente, de structure vitreuse, essentiellement formée de silicates alcalins),
- de matière plastique (c'est-à-dire une matière constituée de macromolécules obtenues par polymérisation ou polycondensation et possédant, en général, la propriété d'être moulée ou modelée), ou
- de silicium ou de silice (oxyde de silicium),

sur laquelle est gravé au moins un microcanal 2 (dont la lumière à un diamètre de l'ordre du micromètre) ou un nanocanal 2 (dont la lumière à un diamètre de l'ordre de la centaine de nanomètres) qui amène, par tout moyen possible, par une entrée 21 des fluides d'un prélèvement jusqu'à différents réservoirs ou différents capteurs 3, aménagés pour l'analyse des fluides ou des molécules se trouvant dans le prélèvement, le fluide s'échappant ensuite par une sortie 22.

Les puces microfluidiques ont une multitude de champs d'application, comme par exemple :

- la biotechnologie, incluant notamment la protéomique et la génomique ;
- la biomédecine, incluant notamment l'étude analytique de séparations sur puce pour un diagnostic précoce de maladies, ou pour un tri de nanomédicaments par exemple ;
- l'écologie, la toxicologie (concernant la qualité de la nourriture, de l'eau, ou de l'air par exemple) ou l'agriculture, domaines pour lesquels il existe un enjeu sanitaire, en particulier en ce qui concerne l'impact des nanoparticules et des ions (par exemple les métaux lourds) dans la vie quotidienne ; et
- la pharmacologie pour une synthèse in situ de nouveaux médicaments.

On comprend que tous ces champs d'application sont fondés sur une analyse biologique ou une analyse chimique dans la puce microfluidique, c'est à dire s'effectuant dans des volumes de fluides inférieurs au $\mu$litre ($10^{-6}$ L), dans un environnement microscopique confiné et parfaitement contrôlé formé par la puce.

On connaît plusieurs techniques de fabrication d'une puce microfluidique comportant du verre ou du silicium.

La première technique connue consiste à fabriquer une puce tout en verre, obtenue par un procédé de fusion à très haute température, c'est-à-dire à une température supérieure à la température Tv de transition vitreuse, c'est-à-dire la température à laquelle le matériau passe de l'état solide dur à l'état visqueux ou gommeux - par exemple pour un verre à base de borosilicate aluminosodique (connu par exemple sous la marque pyrex) :

$$Tv \approx 700°C$$

ou pour la silice :

$$Tv \approx 1410°C \,.$$

On se référera avantageusement à la publication de S. C. Jacobson et al, Anal. Chem. 67 (1995), p. 2059-2063 concernant cette première technique.

La deuxième technique connue, notamment divulguée par US 6 129 854, consiste à fabriquer une puce comportant des éléments en verre collés dans un bain de soude. La température de fabrication est, au contraire de la première technique, très faible, puisqu'elle est inférieure à 100°C.

La troisième technique consiste à fabriquer une puce comportant des éléments en verre collés par l'intermédiaire d'une colle polymère (et donc organique, car comportant des atomes de carbone) pour un scellement à température ambiante. Les colles pour verre existantes sont en général des sol-gels qui permettent d'adhérer au verre grâce à la présence d'un initiateur de vitrification. On se référera avantageusement aux publications suivantes pour le principe des sol-gels :

- J-P. Boilot, M. Canva,C. Sanchez,B. Lebeau, F. Chaput, Y. Lévy, J. Zyss, Applications des matériaux hybrides dans le domaine de l'optique, Matériaux hybrides, série Arago, Observatoire français des techniques avancées (Masson), 17, 181, 1996 ; et
- F. Chaput, J.P. Boilot, F. Devreux, M. Canva, A. Brun et P. Georges, Des gels pour l'optique, Pour la Science, septembre 1993, p. 46-53.

La quatrième technique consiste à fabriquer une puce comportant des éléments en verre possédant un fondant à base de sodium ($Na_2O$), soudés anodiquement par l'intermédiaire d'une fine couche semiconductrice de silicium amorphe (aSi-H). Cette technique consiste à créer des liaisons covalentes entre le verre et la fine couche semiconductrice, sous l'action simultanée d'un fort champ électrique (de plusieurs centaines à plusieurs milliers de volts par centimètre) et d'une température modérée (allant typiquement jusqu'à 450°C maximum). Une couche isolante de quelques dizaines de nanomètres se crée alors et assure la cohésion mécanique à l'interface entre le verre et la couche semiconductrice.

Ces techniques présentent cependant des inconvénients.

La première technique est coûteuse en énergie et impossible à mettre en oeuvre lorsque la puce contient des nanostructures fines (par exemple des nanocanaux 2 en verre, de taille inférieure à 40 nm), à cause du fluage du verre à très haute température, entraînant par conséquent la destruction des nanostructures.

L'intégration de circuits 3 est elle aussi quasiment impossible, car limitée à des matériaux à très haut point de fusion (supérieur à la Tv du verre constituant la puce).

L'utilisation d'outils de fabrication ayant un coefficient de dilatation inférieur à celui du verre et supportant la très haute température de fabrication est également nécessaire.

Par ailleurs, l'utilisation de la soude dans la deuxième technique de fabrication est difficile pour la fabrication d'une puce intégrant soit des micro/nanostructures, soit des circuits avec plusieurs matériaux, et rend sa mise en oeuvre industrielle quasi-impossible.

La colle carbonée obtenue par la troisième technique a une faible inertie chimique, une faible résistance mécanique et une faible isolation électrique (car c'est un matériau organique) associée à une faible tension de claquage de la colle.

La quatrième technique de fabrication présente l'avantage de diminuer fortement la température de fabrication, qui varie entre 100°C et 450 °C en fonction du potentiel électrique appliqué ainsi qu'en fonction du temps de collage. Cependant, les propriétés finales de la puce sont très dégradées par rapport à une puce tout en verre comme celle obtenue par la première technique.

L'isolation électrique dans la puce n'est en effet pas d'aussi bonne qualité que pour les puces tout en verre : les parois latérales en silicium amorphe conducteur (a-Si) des canaux sont mises en contact avec le prélèvement circulant dans la puce. Des réactions électrochimiques parasites peuvent donc avoir lieu dans certains cas.

De plus, des zones de craquage ne sont pas rares à l'interface, où la mise à nu de la couche intermédiaire conduit aux mêmes dégradations que celles dues aux réactions électrochimiques parasites précitées.

Enfin, les circuits intégrés dans la puce peuvent être dégradés par le champ électrique nécessaire à la fabrication de la puce.

Dans des conditions d'utilisation extrêmes, les puces ont une durée de vie très limitée, de l'ordre de quelques heures.

On connait également par ailleurs des techniques de fabrication à basse température de puces microfluidiques comportant un matériau polymère au lieu d'un verre ou de la silice, comme par exemple du polydiméthylsiloxane (PDMS) ou du polyméthacrylate de méthyle (PMMA).

La technique de fabrication est relativement facile, car le collage des éléments composant la puce se fait à température ambiante, et est suivi d'un simple recuit de dégazage.

L'intégration de circuits 3 dans la puce est également facilitée.

Les puces comportant principalement un matériau polymère présentent cependant également des inconvénients.

Les polymères utilisés sont en effet toujours poreux, et mécaniquement trop déformables pour permettre d'intégrer des nanostructures de dimension inférieures à 100 nm (leur plus faible module d'Young engendre des déformations relatives sous contraintes importantes).

Enfin, les puces en matériau polymère sont très peu stables chimiquement au cours du temps. Cette mauvaise inertie chimique proscrit donc toute utilisation pour des analyses chimiques fines en milieux ioniques extrêmes, c'est à dire faiblement ou très fortement concentrés.

EP2096445 divulgue un substrat de puce microfluidique avec une couche formée de dioxyde de silicium.

PRESENTATION DE L'INVENTION

L'invention propose de pallier au moins un de ces inconvénients.

A cet effet, on propose selon l'invention une puce microfluidique comportant

- une plaque, et
- un capot comportant au moins un canal microfluidique,

caractérisée en ce qu'elle comporte en outre une couche unique, intermédiaire entre la plaque et le capot, formée d'une matrice inorganique de $SiO_2$.

L'invention est avantageusement complétée par les caractéristiques suivantes, prises seules ou en une quelconque de leur combinaison techniquement possible :

- la couche a une épaisseur comprise entre 100 nm et 10 $\mu$m, et préférentiellement comprise entre 300 nm et 400 nm ;
- la puce comportant au moins un circuit dans le capot ; et/ou au moins un circuit sur le capot, associé au capot par une matrice inorganique de $SiO_2$.

L'invention concerne également un procédé de fabrication et une plaque associés.

Ainsi, l'invention concerne également un procédé de fabrication d'une puce microfluidique, caractérisé en ce qu'il comporte les étapes de :

- fourniture d'une plaque associée à une couche de gel de silice inorganique de formule :

$$(HSiO_{3/2})_{2n}$$

où n est un nombre entier naturel, et fourniture d'un capot ;
- activation chimique de la couche de gel de silice et du capot, pour rendre la couche de gel et le capot hydrophiles ;
- association mécanique de la couche de gel et du capot, pour former une puce, de sorte que la couche de gel forme une couche intermédiaire entre la plaque et le capot ;
- recuit de la puce, de sorte que la couche de gel de silice se transforme en une couche intermédiaire formée d'une matrice de $SiO_2$ de solidarisation de la plaque et du capot.

Le procédé est avantageusement complété par l'une ou plusieurs des caractéristiques suivantes :

- la température maximale Tr de recuit de la puce (1) est telle que :

$$20°C < Tr < Min(Tv_{plaque}, Tv_{capot})$$

où Min est l'opérateur mathématique minimum, et
$Tv_{plaque}$ et $Tv_{capot}$ sont respectivement la température de transition vitreuse de la plaque et la température de transition vitreuse du capot ;

- la température maximale Tr de recuit de la puce est telle que :

$$100°C \leq Tr \leq 450°C .$$

- la température de recuit évolue, pendant l'étape de recuit, de 20°C à Tr à une vitesse de quelques degrés Celsius par minute, pour permettre la transformation sans craquage du gel de silice en la matrice de $SiO_2$;
- l'étape d'activation chimique de la couche de gel de silice s'effectue grâce à un plasma Air/$O_2$ ; et l'étape d'activation chimique du capot s'effectue grâce à un bain d'ammoniaque ou d'acide sulfurique, pour permettre la formation de groupes chimiques -OH en surface du gel et du capot ;
- le gel inorganique est un gel de silice inorganique de formule :

$$(HSiO_{3/2})_{2n}$$

où n est un nombre entier naturel.

- le procédé comporte une étape de :

    - formation d'au moins un canal microfluidique dans le capot ; et/ou
    - formation d'au moins un circuit dans le capot ; et/ou
    - association d'au moins un circuit sur le capot grâce à une strate de gel de silice activé chimiquement,

antérieurement à l'étape d'association mécanique du gel et du capot.

Préférentiellement, la plaque et le capot sont en verre, par exemple en un verre à base de borosilicate aluminosodique (connu par exemple sous la marque pyrex).

L'utilisation d'une couche de gel de silice inorganique (c'est-à-dire ne comportant pas d'atome de carbone) est nouvelle, car elle diffère de toutes les colles pour verre existantes. Le gel de silice inorganique ne comporte pas d'initiateur de vitrification.

L'invention présente de nombreux avantages.

Elle permet la fabrication d'une puce de structure similaire aux puces entièrement constituées d'un matériau de type verre.

Lorsque la plaque et le capot sont en verre, la puce selon l'invention bénéficie intégralement des propriétés exceptionnelles du verre, à savoir :

- une transparence optique élevée permettant de bonnes observations,
- une résistance mécanique élevée, présentant un module d'Young élevé et une contrainte à la rupture élevée (en fonction du type de verre utilisé) ;
- une porosité faible, ce qui rend la puce parfaitement adaptée à des applications d'analyse chimique dans des conditions de très faible concentration (analyse de toxines faiblement concentrées par exemple) qui évite toute pollution de la part de l'extérieur de la puce et toute fuite de produits dangereux vers l'extérieur ;
- une inertie chimique à la plupart des composés chimiques (à l'exception des dérivés de l'acide fluorhydrique). On peut donc faire circuler dans les microcanaux diverses solutions chimiques. Par exemple les surfaces des canaux fluidiques sont naturellement hydrophiles suite aux traitements chimiques réalisés pour la fabrication de la puce. Cette spécificité est importante pour l'analyse d'échantillons biologiques. Toutefois, si nécessaire, il est possible aussi de traiter les canaux fluidiques pour les rendre hydrophobes, par circulation d'une solution adaptée. Enfin la puce peut subir des nettoyages chimiques, et peut être biopassivées en surface par une simple circulation de liquide adapté et connu de l'homme du métier, pour obtenir à volonté une biocompatibilté. On voit ici l'avantage du caractère d'inertie chimique de la puce.
- une isolation électrique importante qui permet notamment un fonctionnement correct des circuits et l'application de champs électriques externes forts (comme dans le cas d'une électrophorèse capillaire sur puce par exemple)

Une puce selon l'invention peut par conséquent être utilisée pour l'analyse et le suivi de composés biologiques et chimiques dangereux soit en solution, soit sous forme gazeuse.

Une puce selon l'invention présente une multitude de champs d'application, comme par exemple :

- la biotechnologie, incluant notamment la protéomique et la génomique ;
- la biomédecine, incluant notamment l'étude analytique de séparations sur puce pour un diagnostic précoce de maladies (glucomètres par exemple), ou pour un tri de nanomédicaments par exemple, ainsi que la diffusion contrôlée de médicaments ;
- l'écologie, la toxicologie (concernant la qualité de la nourriture, de l'eau, ou de l'air par exemple) ou l'agriculture, domaines pour lesquels il existe un enjeu sanitaire, en particulier en ce qui concerne l'impact des nanoparticules et des ions (par exemple les métaux lourds) dans la vie quotidienne ; et
- la pharmacologie pour une synthèse in situ de nouveaux médicaments.

Lorsqu'elle comporte des nanocanaux ou des nanofentes, elle peut être soumise à un champ électrique fort, afin de concentrer dans les nanocanaux ou les nanofentes des biomolécules ou des protéines, pour la formation de filtres biologiques sur des particules même très petites, par exemple pour le traitement de l'eau, ou pour la fabrication d'hydrogène par dissociation de l'eau.

La température relativement faible de fabrication d'une puce selon l'invention permet l'association du verre avec des matériaux qui ne supportent pas les hautes températures, et permet donc d'augmenter le choix de matériaux pouvant être associés au verre dans la puce.

La température relativement faible de fabrication permet de réduire le coût énergétique de fabrication de chaque puce.

Une puce selon l'invention est stable mécaniquement et chimiquement sur une période de plusieurs mois, même après une exposition à une électrophorèse sous champ électrique fort et dans des conditions extrêmes de pH. Une puce selon l'invention peut ainsi être utilisée plusieurs fois.

Une puce selon l'invention peut comporter trois couches, ce qui permet d'intégrer facilement dans une des couches formant la puce des nanostructures, des capteurs ou des circuits.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1A, déjà commentée, représente une coupe longitudinale d'une puce microfluidique connue ;
- la figure 1B, déjà commentée, représente une coupe longitudinale d'une puce microfluidique connue comportant un circuit ;
- la figure 2A montre une coupe longitudinale d'une puce microfluidique selon l'invention ;
- la figure 2B montre une vue éclatée d'une puce microfluidique selon l'invention ;
- la figure 3 montre schématiquement les principales étapes d'un procédé possible de fabrication d'une puce selon les figures 2 ;
- les figures 4 montrent schématiquement des configurations moléculaires possibles pour un gel de silice inorganique utilisable dans l'invention ;
- la figure 5 représente schématiquement la formation de liaisons hydrogène, notamment entre la couche de gel de silice inorganique et le capot ;
- la figure 6 montre schématiquement les principales étapes d'un procédé possible de fabrication d'une puce selon l'invention comportant un circuit;
- les figures 7 montrent schématiquement différents exemples de circuits selon la figure 6 ;
- la figure 8 montre schématiquement les principales étapes d'un procédé possible de fabrication d'une puce selon l'invention comportant un circuit rapporté par collage;
- la figure 9A représente une vue de dessus d'une puce comportant deux canaux ;
- la figure 9B représente schématiquement une vue en coupe d'une puce selon la figure 9A ; et
- les figures 10A représente l'évolution de la résistance électrique de la puce selon les figures 9, la figure 10B montrant que la puce ne subit aucune dégradation en conditions extrêmes.

Sur l'ensemble des figures, les éléments similaires portent des références numériques identiques.

DESCRIPTION DETAILLEE

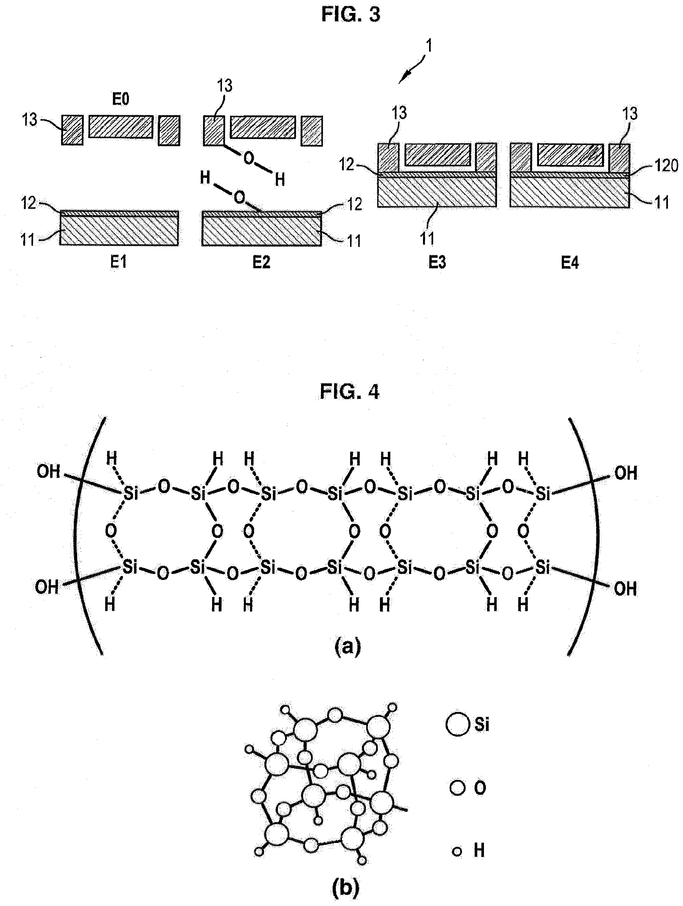

La figure 3 montre schématiquement les principales étapes d'un procédé possible de fabrication d'une puce microfluidique 1 selon l'invention, représentée schématiquement aux figures 2A et 2B.

Un procédé possible de fabrication de la puce microfluidique 1 comporte les étapes principales suivantes.

Une étape E1 consiste en la fourniture d'une plaque 11 associée à une couche unique 12 de gel de silice inorganique et en la fourniture d'un capot 13.

La plaque 11 et le capot 13 peuvent être en tout type de matériau, comme par exemple

- du verre (c'est-à-dire une substance dure, cassante et transparente, de structure vitreuse, essentiellement formée de silicates alcalins),
- une matière plastique (c'est-à-dire une matière constituée de macromolécules obtenues par polymérisation ou polycondensation et possédant, en général, la propriété d'être moulée ou modelée), ou
- du silicium ou de la silice.

Préférentiellement, la plaque 11 et le capot 13 sont en verre, par exemple en un verre à base de borosilicate aluminosodique (connu par exemple sous la marque pyrex).

La couche 12 de gel de silice comporte un gel de silice inorganique, ne comportant pas d'atome de carbone, de formule générale :

$$(HSiO_{3/2})_{2n} \qquad (F1)$$

où n est un nombre entier naturel supérieur ou égal à 1.

Les composés chimiques de formule F1 sont appelés communément les silsesquioxanes d'hydrogène ou HSQ (Hydrogen SilsesQuioxane) par l'homme du métier.

Les HSQ ont une faible constante diélectrique, ce qui leur confère des propriétés d'isolation électrique comme cela est divulgué dans l'article de Balkhanov dans Phyl. Trans. R. Soc. A (2006) 364, p. 201.

Des exemples de HSQ pouvant être utilisés pour l'invention sont représentés schématiquement aux figures 4.

La figure 4A représente une configuration HSQ sensiblement plane (en anglais « ladder HSQ ») divulguée par exemple dans l'article de Albrecht et Blanchette, dans la revue « Journal of the Electrochemical Society » paru en 1998, n°145, p. 4019-4025, et commercialisée par l'entreprise Tokyo Ohka Kogyo.

La figure 4B représente une configuration HSQ cage, par exemple commercialisée sous la marque FOX15 par l'entreprise Dow Corning, avec

$$n=4$$

dans la formule F1.

D'autres HSQ utilisables sont connus par exemple de l'article de Frye et Collins paru dans la revue « Journal of the American Chemical Society » en 1970, n°92, p. 5586 et suivantes. Cet article divulgue notamment d'autres oligomères HSQ selon la formule F1 avec

$$n=4, 5, 6, 7 \text{ ou } 8$$

par exemple.

Lors de l'étape d'association de la couche 12 de gel à la plaque 11, le gel est déposé sur la plaque 11 par centrifugation, par exemple par enduction sur tournette. On comprend qu'une vaporisation du gel sur la plaque 11 serait également possible.

On obtient donc à la fin de l'étape E1 une plaque 11 associée à une couche 12 de gel de silice inorganique pour la formation d'une puce 1 selon l'invention.

Sans activation chimique, la couche 12 de gel de silice inorganique ne présente pas la moindre adhérence à la plaque 11 ou au capot 13, notamment lorsqu'ils sont constitués de verre.

Pour cette raison, le procédé comporte une étape E2 d'activation chimique de la couche 12 de gel de silice et du capot 13, pour rendre la couche 12 de gel et le capot 13 hydrophiles, ce qui permettra d'obtenir une certaine adhérence de la couche 12 au capot 13, comme on le verra par la suite.

L'étape d'activation de la couche 12 de gel s'effectue par un plasma oxygène qui assure la présence de groupements -OH en surface comme on le voit sur la figure 3, assurant ainsi son caractère hydrophile.

L'étape d'activation du capot 13 s'effectue par un procédé classique d'activation, qui permet d'obtenir des groupements -OH en surface, assurant ainsi son caractère hydrophile. Il consiste par exemple à plonger le capot 13 dans un bain $H_2O/NH_4OH/H_2O_2$ pendant une heure à 70°C/80°C. Ce procédé est par exemple divulgué par la publication de Bhattacharya et al, dans « Applied Surface Science », publié en 2007, n°253, p. 4220-4225.

On peut également plonger le capot 13 dans un bain d'acide sulfurique par exemple.

Le procédé comporte également une étape E3 d'association mécanique de la couche 12 de gel et du capot 13, pour former une puce 1, de sorte que la couche 12 de gel forme une couche unique intermédiaire entre la plaque 11 et le capot 13.

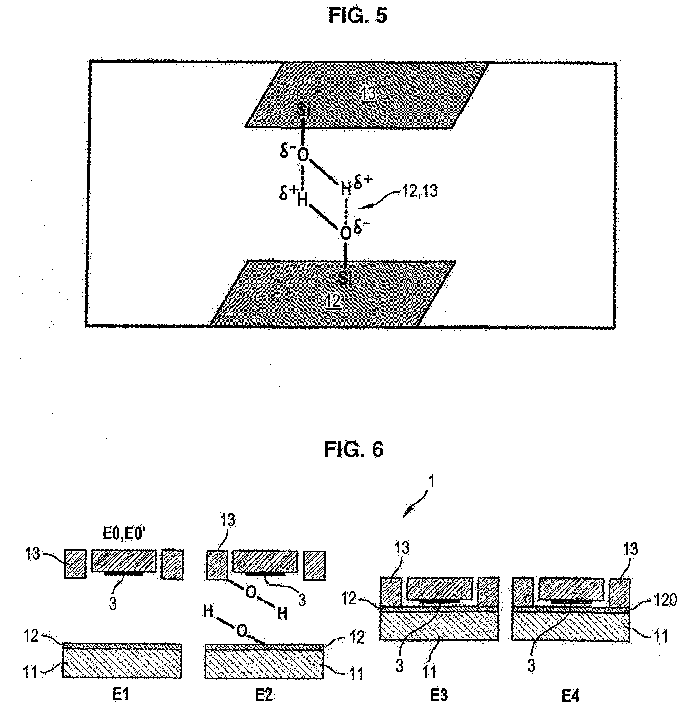

Lors de l'étape E3, du fait que la couche 12 de gel et le capot 13 sont hydrophiles, il y a formation de liaisons 1213 hydrogène (appelées également « liaisons H » ou « liaisons de Van der Walls » par l'homme du métier) entre la couche 12 de gel de silice inorganique et le capot 13, comme le montre schématiquement la figure 5.

Les liaisons hydrogène obtenues lors de l'étape E3 permettent un collage moléculaire, par pontage des liaisons hydrogène. Le collage moléculaire ainsi obtenu est similaire à un collage obtenu à haute température selon la première technique décrite dans l'art antérieur, alors que le procédé selon l'invention n'utilise qu'une couche 12 de gel de silice inorganique qui ne comporte pas d'initiateur pour la vitrification.

Le collage moléculaire se déroule à température ambiante, soit 20°C

Le procédé comporte en outre une étape E4 de recuit de la puce 1, de sorte que la couche unique 12 de gel de silice se transforme en une couche 120 intermédiaire, formée d'une matrice de $SiO_2$ de solidarisation de la plaque 11 et du capot 13. Pendant le recuit, les liaisons 1213 hydrogène se transforme en liaisons covalentes, c'est-à-dire des liaisons entre atomes par paires d'électrons.

La température maximale Tr de recuit de la puce 1 est telle que :

$$20°C < Tr < Min(Tv_{plaque}, Tv_{capot})$$

où Min est l'opérateur mathématique minimum, et

$Tv_{plaque}$ et $Tv_{capot}$ sont respectivement la température de transition vitreuse de la plaque 11 et la température de transition vitreuse du capot 13.

Une telle température Tr de recuit permet la transformation du gel de silice inorganique en une matrice de $SiO_2$ tout en évitant le fluage de la plaque 11 et du capot 13.

Dans le cas où la plaque 11 et le capot 13 sont en verre, par exemple en un verre à base de borosilicate aluminosodique,

$$Tv_{plaque} = Tv_{capot} = 700°C.$$

Préférentiellement dans ce cas, la température maximale Tr de recuit de la puce 1 est telle que :

$$50°C \leq Tr \leq 600°C,$$

et très préférentiellement telle que :

$$100°C \leq Tr \leq 450°C.$$

Avantageusement,

$$150°C \leq Tr \leq 300°C.$$

La puce 1 peut ainsi être qualifiée de puce « tricouche », une première couche étant constituée de la plaque 11, une deuxième couche étant constituée de la couche intermédiaire 120, et une troisième couche étant constituée du capot 13.

Lorsque la plaque 11 et le capot 13 sont en verre, la puce tricouche obtenue présente des caractéristiques physico-chimiques équivalentes à celles des puces en verre obtenues selon la première technique de l'art antérieur.

Cependant, étant donné que la couche intermédiaire 120 formée à partir du gel de silice est parfaitement isolante, la puce présente des qualités électriques semblables à une puce tout en verre, même si la plaque 11 est constituée d'un autre matériau que le verre.

Dans tous les cas, la puce selon l'invention est obtenue avec une température de fabrication inférieure à la température de transition vitreuse de la plaque 11, et inférieure à la température de transition vitreuse du capot 13. Le coût énergétique de fabrication est donc moindre que dans l'art antérieur.

De plus, du fait que la température maximale Tr de recuit est inférieure à la température minimale de transition vitreuse de la plaque 11 et du capot 13, le procédé peut comporter une étape E0 de formation d'au moins un canal 2 microfluidique dans le capot 13, antérieurement à l'étape d'association mécanique du gel 12 et du capot 13, et donc de recuit. Le microcanal 2 ne sera pas détérioré pendant l'étape E4 de recuit.

Le capot 13 comporte ainsi avantageusement au moins un canal 2 microfluidique, et notamment un canal 2 dont la lumière à un diamètre inférieur à 100 nm, par exemple de 40 nm. Les nanostructures du canal 2 ne seront en effet aucunement affectées par le recuit à une température préférentielle inférieure à 300°C.

La formation du canal 2 dans la capot 13 ne présente pas de difficulté pour l'homme du métier, et n'est pas décrite ici en détail par souci de clarté et de concision. Chaque canal 2 est par exemple obtenu par l'utilisation d'acide sulfurique, d'ammoniaque (liquide), d'acide fluorhydrique, et/ou obtenus par lithographie et gravure ionique réactive par exemple, directement dans le matériau du capot 13. Le canal 2 peut être un canal longitudinal simple, en forme de croix ou de Y, mais peut bien entendu présenter d'autres formes, et notamment comporter des réservoirs, par exemple sous forme de microcavités.

Par ailleurs, du fait que la température Tr est relativement faible, le procédé peut comporter une étape de formation E0' d'au moins un circuit 3 dans le capot 13, comme le montre la figure 6. Comme précédemment, l'étape E0' est antérieure à l'étape d'association mécanique du gel 12 et du capot 13.

La formation du circuit 3 dans le capot 13 utilise les procédés classiques de la microélectronique, qui ne présentent pas de difficulté pour l'homme du métier, et n'est pas décrite ici en détail par souci de clarté et de concision. Les circuits 3 sont par exemple obtenus par l'utilisation d'acide sulfurique, d'ammoniaque (liquide), d'acide fluorhydrique, et/ou obtenus par lithographie et gravure ionique réactive, directement dans le matériau du capot, ces techniques étant par exemple associées à des procédés connus de dépôt de métaux pour la formation de pistes électriques (par exemple pour le contrôle de la température sur la puce 1), ou d'électrodes magnétiques à titre d'exemples non limitatifs.

Les développements qui suivent donnent quelques exemples de circuits possibles connus.

On connaît ainsi déjà des capteurs de mesure de température formés par des circuits 3 tels que précités, permettant notamment d'effectuer des mesures de température en temps réel.

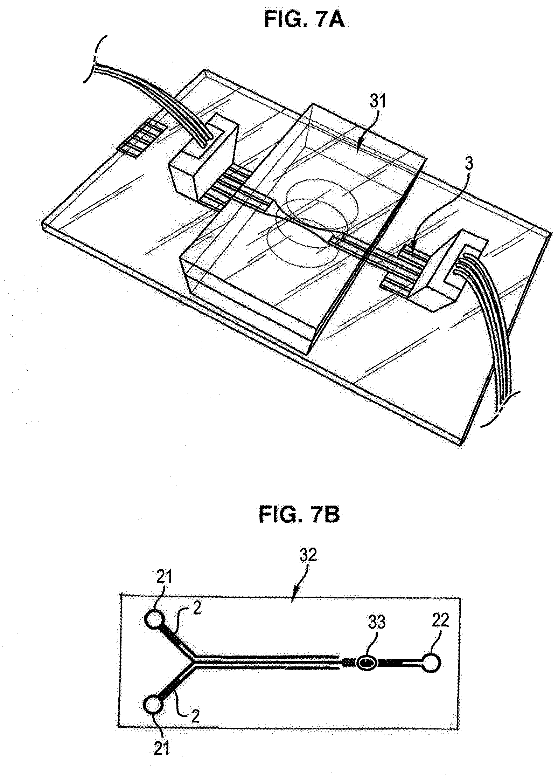

La figure 7A montre un microconductimètre 31 pour la mesure de nanofluides, comportant un réseau d'électrodes 3 métalliques. Un tel microconductimètre 31 est par exemple divulgué par l'article de G. Velve Casquillas, « Microlectronic Engineering » 84 (2007) p. 1194 à 1197. La figure 7B représente un microcalorimètre 32 couplé à une chambre 33 de réaction chimique formés par un canal 2 en forme de Y. Un tel microcalorimètre 32 est par exemple divulgué par l'article de G. Velve Casquillas, « Microlectronic Engineering » 85 (2008) p. 1367 à 1369.

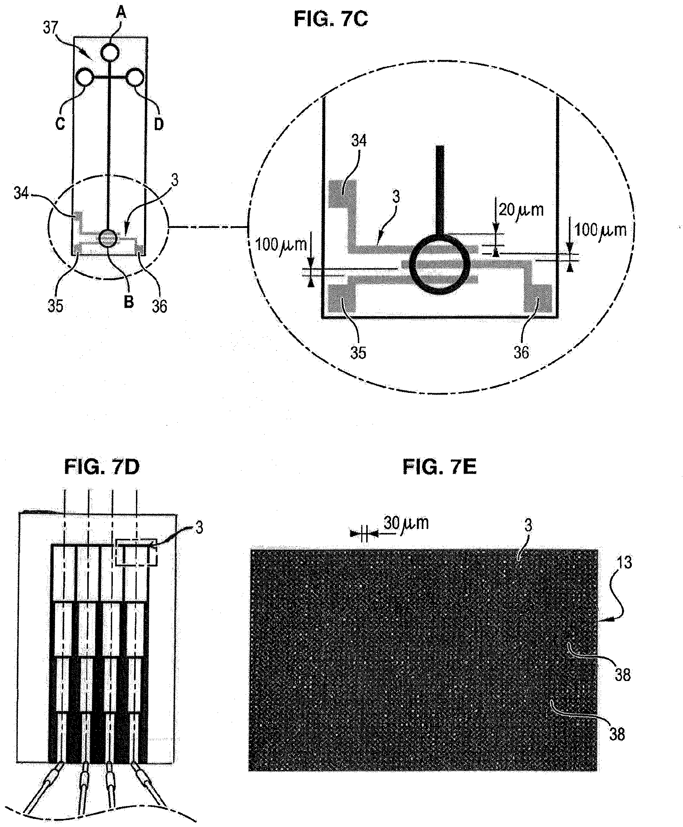

Comme le montrent les figures 7C et 7D, on connaît également des capteurs électrochimiques comportant des électrodes.

Sur la figure 7C, la puce 1 peut comporter par exemple un capteur 3 comportant trois microélectrodes 34, 35 et 36 placées en aval d'une croix 37 de séparation électrophorétique, pour une détection électrochimique de neurotransmetteurs du type dopamine et épinéphrine. Un tel capteur est par exemple divulgué par l'article de Castano-Álvarez, « Talanta » 80 (2009) p. 24 à 30. Le signal électrique mesuré issu des microélectrodes 34, 35 et 36 peut être analysé dans une électronique compacte qui peut être embarquée sur la puce. La figure 7D montre un autre exemple d'électrodes 3 pour l'électrochimie intégrées dans une puce multiplexée comportant un réseau de trente-deux électrodes, par exemple pour des expériences d'électro-chimiluminescence.

Des électrodes équivalentes peuvent aussi être utilisées pour effectuer des mesures de conductivité de solutions chimiques ou biologiques.

La figure 7E représente schématiquement des nanocapteurs 38 photoniques (résolution de 30 nm) obtenue par la technique connue de nanoimpression, qui peut être combinée avec des procédés de gravure ionique réactive dans des empilements multicouches de résine pour obtenir des nanomotifs avec de très grands facteurs de forme.

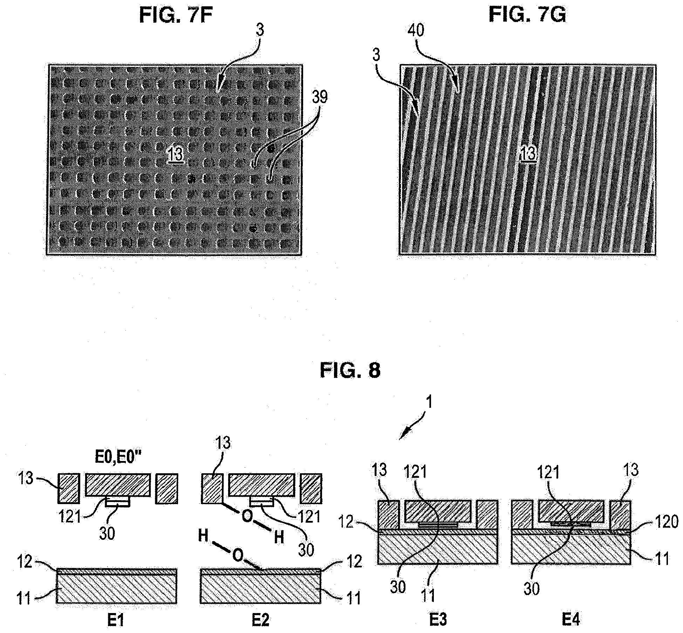

Les figures 7F et 7G représentent des réseaux de nanostructures optiques piégeantes connues obtenues par la combinaison précitée.

La figure 7F représente un exemple de structures 39 plasmoniques (c'est-à-dire capables de transmettre des signaux lumineux en utilisant les ondes électromagnétiques émises par une oscillation collective d'électrons). La figure 7G représente un exemple d'un réseau 40 de cristal photonique de lignes, imprimé dans un gel d'oxyde.

Comme le montre la figure 8, le procédé peut comporter une étape E0" d'association d'au moins un circuit 30 sur le capot 13 grâce à une strate 121 de gel de silice activé chimiquement. La strate 121 est de composition identique à la couche 12, et est activée chimiquement de la même façon que la couche 12, et on obtient un collage moléculaire entre le circuit 30 et le capot 13, comme représenté sur la figure 5. Lors de l'étape E4 de recuit, la strate 121 sera transformée en matrice de $SiO_2$ de la même façon que la couche intermédiaire 120, simultanément.

Le circuit 30 peut ainsi être tout type de capteur disponible en microélectronique. Le circuit 30 peut contenir des nanocircuits, comme par exemple des nanoélectrodes et des nanostructures optiques.

Le circuit 30 collé peut être combiné à un circuit 3 et/ou un canal 2 tels que décrit ci-dessus.

La formation de la connectique associée aux différents circuits 3 et 30 pour une connexion à une électronique d'analyse des signaux issus des circuits 3 ou 30 ne pose pas non plus de difficultés à l'homme du métier, et n'est pas reprise ici pour des raisons de clarté et de concision.


EXEMPLE DE REALISATION

Les développements qui suivent donnent un exemple pour la fabrication d'une puce 1.

En ce qui concerne l'étape E1 de fourniture du capot 13, on pratique tout d'abord sur le capot 13 l'étape E0, E0' et/ou E0" de

- formation d'au moins un canal 2 microfluidique ; et/ou
- formation d'au moins un circuit 3 ; et/ou
- association d'au moins un circuit 30 grâce à une strate 120 de gel de silice activé chimiquement.

On comprend que l'association entre la strate 120 et le capot 13 est identique à l'association entre la couche 12 et la plaque 11 décrite dans la présente description : ainsi l'activation de la strate 120 est identique à l'activation de la couche 12 décrite dans la présente description, avec une activation chimique du capot 13 par bain d'ammoniaque.

La plaque 11 et le capot 13 ont un diamètre de 5 cm environ (2 pouces). Le passage à la fabrication de plusieurs puces sur de plus grands substrats (4 à 10 pouces par exemple) est facilement envisageable, en rajoutant une étape finale de sciage. L'épaisseur de la plaque 11 et du capot 13 peut être comprise typiquement entre 200 $\mu$m et 1 mm. Plus l'épaisseur est fine plus la mise en contact est aisée, mais plus la plaque et le capot sont fragiles.

En ce qui concerne l'étape E1 de fourniture de la plaque 11, pour effectuer l'association de la couche 12 et de la plaque 11, une petite quantité (par exemple une goutte) d'une solution HSQ filtrée à 0.45 $\mu$m est déposée sur la plaque 11, elle-même disposée sur une tournette. La solution HSQ est filtrée pour éviter toute poussière préjudiciable au collage.

La couche 12 HSQ est obtenue par centrifugation à 5000 tours/min pendant 30 secondes (accélération fixée à 2000 tours/min).

L'épaisseur de la couche 12 obtenue est généralement comprise entre 100 nm et 10 $\mu$m, typiquement inférieure au micromètre, par exemple comprise entre 300 nm et 400 nm.

La plaque 11 associée à la couche 12 HSQ est recuite à 150°C pendant deux minutes sur une plaque chauffante.

En ce qui concerne l'étape E2, l'activation chimique de la surface supérieure de la couche 12 est obtenue par immersion de la plaque 11 associée à la couche 12 dans un plasma riche en oxygène (300 mtorr) pendant 30 secondes.

Le capot 13 est quant à lui activé chimiquement grâce à une immersion dans un bain (NH$_3$ (28%) / H$_2$O$_2$ / H$_2$O 1:1:5) pendant environ une heure à 80°C, puis rincé dans de l'eau désionisée pendant deux minutes. On peut également plonger le capot dans un bain d'acide sulfurique par exemple.

Une fois l'étape E2 effectuée, il faut procéder relativement rapidement à l'étape E3 d'association mécanique de la couche 12 et du capot 13. L'hygrométrie ambiante ne doit pas dépasser 50% lors de l'étape E3 pour obtenir un bon collage par la suite. L'étape E3 s'effectue avantageusement à 20°C.

Lors de l'étape E3, l'association mécanique de la couche 12 et du capot 13 peut s'effectuer par pressage manuel. Pour les grandes surfaces, on privilégiera par exemple une presse de la marque Nanonex NXR2500 disponible dans le commerce, qui permet d'appliquer une pression uniforme sur la plaque 11 et le capot 13, grâce à un système de deux membranes souples.

L'association s'effectue sous faible pression (inférieure à 10 bar, soit 1 MPa). La pression à appliquer dépend de la densité des motifs canaux 2 ou des circuits 3 sur le capot 13.

L'étape E4 de recuit est lente. Typiquement un palier de dix heures à 300°C est nécessaire pour transformer la HSQ en une matrice de silice.

Le recuit s'effectue dans un four classique, sous un flux d'azote de 50cm$^3$/sec.

Durant l'étape E4, la température de recuit évolue de 20°C à Tr (température maximale de recuit, à savoir la température du palier) à une vitesse de quelques degrés Celsius par minute, pour permettre la transformation sans craquage du gel de silice en la matrice de SiO$_2$.

Ainsi, la vitesse d'évolution de la température de recuit est de

7°C/min
entre 20°C et 200°C,
5°C/min
entre 200°C et 250°C, et
3°C/min
entre 250°C et 300°C (Tr), puis
palier à 300 °C
pendant dix heures, et enfin décroissance lente par arrêt du chauffage du four.

Si la résistance mécanique désirée pour la puce est plus faible (résistance mécanique à une pression de quelques bars uniquement), il est possible de diminuer la température de recuit, par exemple en effectuant uniquement un recuit à 150°C.

Pour une température Tr de recuit de 150°C, un palier de vingt heures à 150°C est préférable, avec une vitesse d'évolution de

1°C/min
entre 20°C et 150°C.

Si la résistance mécanique désirée pour la puce est encore plus faible, il est possible de diminuer la longueur temporelle du palier de recuit, par exemple en effectuant uniquement un palier de dix heures environ à 150°C, voire 5 heures uniquement. L'important est d'obtenir au final une matrice de SiO$_2$.

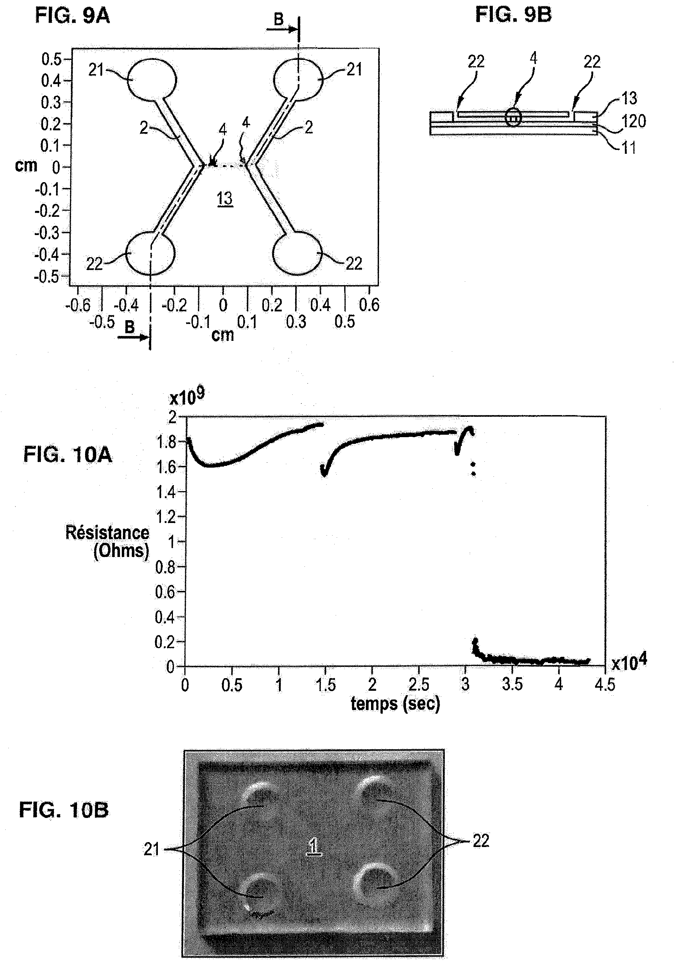

Les figures 9A et 9B représentent une puce comportant deux microcanaux 2 coudés, l'un étant relié à une anode, l'autre à une cathode. Chaque microcanal forme une lumière de 2 μm de diamètre, et les canaux 2 sont espacés, au niveau de leur coude 4, seulement de 10 μm par le matériau du capot 13 et/ou la matrice de silice formée par le gel de silice recuit. On fait passer dans chaque canal 2 (via l'entrée 21 puis la sortie 22) une solution fréquemment utilisé en biologie, à savoir une solution tampon, ici une solution tampon phosphate, soit du PBS ("Phosphate Buffer Solution" en anglais) à une concentration de 50 mM avec un pH de 6,6.

La figure 10A montre que la puce ne montre aucun signe de dégradation sous l'application de 1 MVolt/cm à travers la zone de 10 μm.

La figure 10B montre que la résistance de la puce a une valeur moyenne de 10^9 Ohms, soit une résistance deux ordres de grandeur supérieure aux puces de l'art antérieur selon la quatrième technique par exemple. On retrouve bien ici la preuve du caractère isolant de la couche intermédiaire 120.

La durée de vie d'une puce selon l'invention est donc au moins de plusieurs mois.

**Revendications**

1. Puce (1) microfluidique comportant

    - une plaque en verre (11),
    - un capot en verre (13) comportant au moins un canal (2) microfluidique et une couche (120) intermédiaire entre la plaque (11) et le capot (13), formée d'une matrice inorganique de $SiO_2$,

    la puce étant **caractérisée en ce que** la couche (120) formée d'une matrice de $SiO_2$ est issue du recuit d'une couche (12) de gel de silice inorganique de formule $(HSiO_{3/2})_{2n}$ où n est un nombre entier naturel.

2. Puce selon la revendication 1, dans laquelle la couche (120) formée d'une matrice de $SiO_2$ est unique.

3. Puce selon l'une des revendications 1 ou 2, dans laquelle la couche (120) a une épaisseur comprise entre 100 nm et 10 μm, et préférentiellement comprise entre 300 nm et 400 nm.

4. Puce selon l'une des revendications 1 à 3, comportant

    - au moins un circuit (3) dans le capot (13) ; et/ou
    - au moins un circuit (30) sur le capot (13), associé au capot par une matrice inorganique de $SiO_2$.

5. Procédé de fabrication d'une puce microfluidique (1), **caractérisé en ce qu'**il comporte les étapes de :

    - fourniture (E1) d'une plaque (11) associée à une couche (12) de gel de silice inorganique de formule :

    $$(HSiO_{3/2})_{2n}$$

    où n est un nombre entier naturel, et fourniture (E1) d'un capot (13) ;
    - activation (E2) chimique de la couche (12) de gel de silice et du capot (13), pour rendre la couche (12) de gel et le capot (13) hydrophiles ;
    - association (E3) mécanique de la couche (12) de gel et du capot (13), pour former une puce (1), de sorte que la couche (12) de gel forme une couche intermédiaire entre la plaque (11) et le capot (13) ;
    - recuit (E4) de la puce (1), de sorte que la couche (12) de gel de silice se transforme en une couche (120) intermédiaire formée d'une matrice de $SiO_2$ de solidarisation de la plaque (11) et du capot (13).

6. Procédé selon la revendication 5, dans lequel la température maximale Tr de recuit de la puce (1) est telle que :

$$20°C < Tr < Min(Tv_{plaque}, Tv_{capot})$$

    où Min est l'opérateur mathématique minimum, et
    $Tv_{plaque}$ et $Tv_{capot}$ sont respectivement la température de transition vitreuse de la plaque (11) et la température de transition vitreuse du capot (13).

**7.** Procédé selon la revendication 6, dans lequel la température maximale Tr de recuit de la puce (1) est telle que :

$$100°C \leq Tr \leq 450°C .$$

**8.** Procédé selon l'une des revendications 6 ou 7, dans lequel la température de recuit évolue, pendant l'étape de recuit, de 20°C à Tr à une vitesse de quelques degrés Celsius par minute, pour permettre la transformation sans craquage du gel de silice en la matrice de $SiO_2$.

**9.** Procédé selon l'une des revendications 5 à 8, dans lequel

- l'étape d'activation chimique de la couche (12) de gel de silice s'effectue grâce à un plasma Air/$O_2$ ; et
- l'étape d'activation chimique du capot (13) s'effectue grâce à un bain d'ammoniaque ou d'acide sulfurique,

pour permettre la formation de groupes chimiques -OH en surface du gel (12) et du capot (13).

**10.** Procédé selon l'une des revendications 5 à 9, comportant une étape de :

- formation d'au moins un canal (2) microfluidique dans le capot (13) ; et/ou
- formation d'au moins un circuit (3) dans le capot (13) ; et/ou
- association d'au moins un circuit (30) sur le capot (13) grâce à une strate (120) de gel de silice activé chimiquement, antérieurement à l'étape d'association mécanique du gel (12) et du capot (13).

**11.** Plaque (11) ayant une épaisseur comprise entre 200 $\mu$m et 1mm et étant associée à une couche (12) de gel de silice inorganique, ayant une épaisseur comprise entre 100 nm et 10$\mu$m, pour la formation d'une puce (1) selon l'unes des revendications 1 à 4 par un procédé selon l'une des revendications 5 à 10.

**Patentansprüche**

**1.** Mikrofluider Chip (1), aufweisend

- eine Glasplatte (11),
- einen Glasdeckel (13), aufweisend mindestens einen mikrofluiden Kanal (2) und eine Zwischenschicht zwischen der Platte (11) und dem Deckel (13), gebildet von einer anorganischen Matrix aus $SiO_2$,

wobei der Chip **dadurch gekennzeichnet ist, dass** die von einer Matrix aus $SiO_2$ gebildete Schicht (120) aus dem Tempern einer anorganischen Siliziumoxidgelschicht (12) der Formel $(HSiO_{3/2})_{2n}$ resultiert, wobei n eine natürliche Ganzzahl ist.

**2.** Chip nach Anspruch 1, wobei die von einer Matrix aus $SiO_2$ gebildete Schicht (120) einzig ist.

**3.** Chip nach einem der Ansprüche 1 oder 2, wobei die Schicht (120) eine Stärke zwischen 100 nm und 10 $\mu$m inklusive, und vorzugsweise zwischen 300 nm und 400 nm inklusive hat.

**4.** Chip nach einem der Ansprüche 1 bis 3, aufweisend

- mindestens einen Kreis (3) in dem Deckel (13); und/oder
- mindestens einen Kreis (30) auf dem Deckel (13), der dem Deckel mittels einer anorganischen Matrix aus $SiO_2$ zugeordnet ist.

**5.** Verfahren zur Herstellung eines mikrofluiden Chips (1), **dadurch gekennzeichnet, dass** es die folgenden Schritte umfasst:

- Bereitstellen (E1) einer Platte (11), die einer Gelschicht (12) aus anorganischem Siliziumoxid der Formel zugeordnet ist:

$(HSiO_{3/2})$ 2n

wobei n eine natürliche Ganzzahl ist, und Bereitstellen (E1) eines Deckels (13);
- chemisches Aktivieren (E2) der Siliziumoxidgelschicht (12) und des Deckels (13), um die Gelschicht (12) und den Deckel (13) hydrophil auszurüsten;
- mechanisches Zuordnen (E3) der Gelschicht (12) und des Deckels (13), um einen Chip (1) derart zu bilden, dass die Gelschicht (12) eine Zwischenschicht zwischen der Platte (11) und dem Deckel (13) bildet;
- Tempern (E4) des Chips (1) derart, dass sich die Siliziumoxidgelschicht (12) in eine Zwischenschicht (120) umwandelt, die von einer Verbindungsmatrix aus $SiO_2$ der Platte (11) und des Deckels (13) gebildet ist.

6. Verfahren nach Anspruch 5, wobei die maximale Tempertemperatur Tr des Chips (1) derart ist, dass:

$$20 \ °C < Tr < Min(Tv_{Platte}, \ Tv_{Deckel})$$

wobei Min der minimale mathematische Operator ist, und
$TV_{Platte}$ und $Tv_{Deckel}$ jeweils die Glasumwandlungstemperatur der Platte (11) und die Glasumwandlungstemperatur des Deckels (13) sind.

7. Verfahren nach Anspruch 6, wobei die maximale Tempertemperatur Tr des Chips (1) derart ist, dass:

$$100 \ °C \leq Tr \leq 450 \ °C.$$

8. Verfahren nach einem der Ansprüche 6 oder 7, wobei sich die Tempertemperatur während des Temperschritts von 20 °C bei Tr in einer Geschwindigkeit von einigen Grad Celsius pro Minute entwickelt, um die Umwandlung des Siliziumoxidgels in die $SiO_2$-Matrix ohne Spaltung zu erlauben.

9. Verfahren nach einem der Ansprüche 5 bis 8, wobei

- der Schritt der chemischen Aktivierung der Siliziumoxidgelschicht (12) mit einem Plasma Luft/$O_2$ erfolgt; und
- der Schritt der chemischen Aktivierung des Deckel (13) mit einem Ammoniak- oder Schwefelsäurebad erfolgt,

um die Bildung chemischer Gruppen -OH auf der Oberfläche des Gels (12) und des Deckels (13) zu erlauben.

10. Verfahren nach einem der Ansprüche 5 bis 9, aufweisend einen Schritt:

- des Bildens mindestens eines mikrofluiden Kanals (2) im Deckel (13); und/oder
- des Bildens mindestens eines Kreises (3) im Deckel (13); und/oder
- des Zuordnens mindestens eines Kreises (30) auf den Deckel (13) dank einer vor dem Schritt des mechanischen Zuordnens des Gels (12) und des Deckels (13) chemisch aktivierten Siliziumoxidgelschicht (120).

11. Platte (11) in einer Stärke zwischen 200 $\mu$m und 1 mm inklusive und zugeordnet einer anorganischen Siliziumoxidgelschicht (12) in einer Stärke zwischen 100 nm und 10 $\mu$m inklusive für die Bildung eines Chips (1) nach einem der Ansprüche 1 bis 4 mittels eines Verfahrens nach einem der Ansprüche 5 bis 10.

## Claims

1. A microfluidic chip (1) comprising

- a glass plate (11),
- a glass cap (13) comprising at least one microfluidic channel (2) and an intermediate layer (120) between the plate (11) and the cap (13), formed by an inorganic $SiO_2$ matrix,

the chip being **characterized in that** the layer (120) formed by an $SiO_2$ matrix comes from the annealing of a layer (12) of gel of inorganic silica of formula $(HSiO_{3/2})_{2n}$ where n is a natural whole number.

2. The chip according to claim 1, wherein the layer (120) formed by an $SiO_2$ matrix is single.

3. The chip according to one of claims 1 or 2, wherein the layer (120) has a thickness of between 100 nm and 10 $\mu$m, and preferably between 300 nm and 400 nm.

4. The chip according to one of claims 1 to 3, comprising

   - at least one circuit (3) in the cap (13); and/or
   - at least one circuit (30) on the cap (13), connected to the cap by an inorganic $SiO_2$ matrix.

5. A process for producing a microfluidic chip (1), **characterized in that** it comprises the steps of:

   - providing (E1) a plate (11) connected to a layer (12) of gel of inorganic silica of formula:

   $$(HSiO_{3/2})_{2n}$$

   where n is a natural whole number, and providing (E1) a cap (13);
   - chemical activation (E2) of the layer (12) of silica gel and of the cap (13) to make the layer (12) of gel and the cap (13) hydrophilic;
   - mechanical association (E3) of the layer (12) of gel and of the cap (13) to form a chip (1), such that the layer (12) of gel forms an intermediate layer between the plate (11) and the cap (13);
   - annealing (E4) of the chip (1) such that the layer (12) of silica gel is transformed into an intermediate layer (120) formed by an $SiO_2$ connecting matrix of the plate (11) and of the cap (13).

6. The process according to claim 5, wherein the maximal annealing temperature Tr of the chip (1) is such that:

$$20°C < Tr < Min(TV_{plate}, TV_{cap})$$

   where Min is the minimum mathematical operator, and
   $TV_{plate}$ and $TV_{cap}$ are respectively the vitreous transition temperature of the plate (11) and the vitreous transition temperature of the cap (13).

7. The process according to claim 6, wherein the maximal annealing temperature Tr of the chip (1) is such that:

$$100°C \leq Tr \leq 450°C.$$

8. The process according to one of claims 6 or 7, wherein the annealing temperature evolves, during the annealing step, from 20°C at Tr to a speed of a few degrees Celsius per minute, to allow transformation without cracking of the silica gel in the $SiO_2$ matrix.

9. The process according to one of claims 5 to 8, wherein

   - the chemical activation step of the layer (12) of silica gel is conducted due to Air/$O_2$ plasma; and
   - the chemical activation step of the cap (13) is conducted due to a bath of ammonia or sulphuric acid,

   to allow the formation of chemical -OH groups at the surface of the gel (12) and of the cap (13).

10. The process according to one of claims 5 to 9, comprising a step of:

    - formation of at least one microfluidic channel (2) in the cap (13); and/or
    - formation of at least one circuit (3) in the cap (13); and/or
    - association of at least one circuit (30) on the cap (13) due to a stratum (120) of chemically activated silica gel,
    prior to the mechanical association step of the gel (12) and of the cap (13).

11. A plate (11) having a thickness of between 200 $\mu$m and 1 mm and being connected to a layer (12) of gel of inorganic silica, having a thickness of between 100 nm and 10 μm to form a chip (1) according to one of claims 1 to 4 by a process according to one of claims 5 to 10.

# FIG. 1A

# FIG. 1B

# FIG. 2A

# FIG. 2B

## FIG. 3

E0    E1    E2    E3    E4

## FIG. 4

(a)

◯ Si

○ O

o H

(b)

## FIG. 5

## FIG. 6

## FIG. 7A

## FIG. 7B

**FIG. 7C**

**FIG. 7D**

**FIG. 7E**

## FIG. 7F

## FIG. 7G

## FIG. 8

## FIG. 9A

## FIG. 9B

## FIG. 10A

## FIG. 10B

## RÉFÉRENCES CITÉES DANS LA DESCRIPTION

### Documents brevets cités dans la description

- US 6129854 A
- EP 2096445 A

### Littérature non-brevet citée dans la description

- **S. C. JACOBSON et al.** *Anal. Chem.,* 1995, vol. 67, 2059-2063
- **J-P. BOILOT ; M. CANVA ; C. SANCHEZ ; B. LEBEAU ; F. CHAPUT ; Y. LÉVY ; J. ZYSS.** Applications des matériaux hybrides dans le domaine de l'optique. *Matériaux hybrides, série Arago, Observatoire français des techniques avancées (Masson),* 1996, vol. 17, 181
- **F. CHAPUT ; J.P. BOILOT ; F. DEVREUX ; M. CANVA ; A. BRUN ; P. GEORGES.** *Des gels pour l'optique, Pour la Science,* Septembre 1993, 46-53
- **BALKHANOV.** *Phyl. Trans. R. Soc. A,* 2006, vol. 364, 201
- **ALBRECHT ; BLANCHETTE.** *Journal of the Electrochemical Society,* 1998, (145), 4019-4025
- *Journal of the American Chemical Society,* 1970, (92), 5586
- **BHATTACHARYA et al.** *Applied Surface Science,* 2007, (253), 4220-4225
- **G. VELVE CASQUILLAS.** *Microlectronic Engineering,* 2007, vol. 84, 1194-1197
- **G. VELVE CASQUILLAS.** *Microlectronic Engineering,* 2008, vol. 85, 1367-1369
- **CASTANO-ÁLVAREZ.** *Talanta,* 2009, vol. 80, 24-30